# EUROPEAN PATENT APPLICATION

(11) **EP 1 653 320 A1**
(43) Date of publication of application: **03.05.2006**
(21) Application number: 05252731.4
(22) Date of filing: 03.05.2005
(51) Int. Cl.: G06F 1/00

(54) **Data processing apparatus**

(30) Priority: 26.10.2004 JP 2004311614
(71) Applicant: FUJITSU LIMITED, Kawasaki-shi, Kanagawa 211-8588 (JP); Fujitsu Frontech Limited, Inagi-shi, Tokyo 206-8555 (JP)
(72) Inventor: Satou, Keizou, Tokyo 206-8555 (JP); Katsumata, Yutaka,, Tokyo 206-8555 (JP); Matsui, Takayuki, Tokyo 206-8555 (JP)
(74) Representative: Stebbing, Timothy Charles

(57) **Abstract**

When receiving prescribed entry data from an input device (2), a data entry device (5) issues an authenticate request to a biometric authentication device (3). Upon receipt of the authenticate request, the , authentication device (3) authenticates the biometric information transmitted from the input device (2) by collating it with each piece of biometric information stored in a biometric authentication DB (4), and returns the authentication result to the data entry device (5). The data entry device (5) registers, accesses entry data and executes PKI signature, based on the authentication result transmitted from the authentication device (3).

## Description

The present invention relates to a data processing apparatus for performing data processing, such as the registration and reference of data, and the like, by the operation of an operator.

In a data processing apparatus for performing data processing by a plurality of operators, such as a data processing apparatus applied to a workflow and the like, a variety of methods are adopted to prevent data leakage.

For example, there is a method for preventing data leakage by identifying an operator usingbiometric (below, "biological") information, e.g. fingerprint or iris, of the operator when an operator uses a data processing apparatus (for example, see Patent References 1-6).

However, if an operator is identified using biological information, a problem arises when the operator changes while a data processing apparatus is used. That is, cannot be guaranteed that data is processed and registered throughout the process by the same operator at the time of log-in, using the data processing apparatus, which is a problem.

Therefore, for example, a data processing apparatus can be operated in an environment such that an operator cannot change after log-in. Specifically, a data processing apparatus can be installed in a room whose security is assured (such as a room whose door is provided with a card key type or a password type lock system). Alternatively, security education (such as education that prohibits an operator from leaving a seat until log-out after log-in) can be given to operators.
Patent reference 1:
   Japanese Patent Application No. H3-176719 (pp.2-5, Figs. 1-4)
Patent reference 2:
   Japanese Patent Application No. H1-154295 (pp.1-4, Figs. 1-4)
Patent reference 3:
   Japanese Patent Application No. H2-189616 (pp.1-4, Figs. 1-6)
Patent reference 4:
   Japanese Patent Application No. H11-306143 (pp.2-4, Figs. 1&2)
Patent reference 5:
   Japanese Patent Application No. 2004-54395 (pp.3-7, Figs. 1-5)
Patent reference 6:
   Japanese Patent Application No. 2000-353204 (pp.3-8, Figs. 1-7)

However, as described above, if a data processing apparatus is installed in a room whose security is assured, a lock system provided for a door must be released every time an operator uses the data processing apparatus. Therefore, the workability of an operator degrades, which is another problem.

If security education is given to operators, the security education must be repeated every time a new operation is posted. Therefore, security assurance requires a lot of costs and hours, which is another problem.

An embodiment of the invention can provide a data processing apparatus capable of preventing the reliability of data to be processed and the workability of an operator from degrading without giving education to the operator.

In view of the above-mentioned problems, the present invention has adopted the following configuration.

Specifically, the data processing apparatus of the present invention comprises a data input unit for inputting data according to the operation of an operator, a biological information input unit for inputting the biological information of the operator and a data processing unit for issuing an authenticate request when receiving prescribed data from the data input unit, responding to the authenticate request and authenticating the biological information obtained by the biological information input unit by collating with biological information registered beforehand for said operator, and processing the information from the data input unit assuming that the information is valid when receiving an authentication result which is successful.

As described above, since an operator's identity is authenticated by biological information in the case where prescribed data is inputted, the data cannot be processed except by the relevant operator, and also there is no need for an operator's operation, such as the input of his/her password/identification (ID) or the like in order to identify the operator. Therefore, there is no need for the security education of operators. Accordingly, the reliability of data to be processed and the workability of an operator can be prevented from degrading.

The data processing apparatus can also further comprise a biological information storage unit for storing a plurality of pieces of biological information of a plurality of operators beforehand. In this case, when receiving the authenticate request, the data processing unit can authenticate the biological information obtained by the biological information input unit when the prescribed data is inputted with each piece of biological information of a plurality of operators stored in the biological information storage unit, based on the result of the collation result of each of the plurality of pieces of biological information of a plurality of operators stored in the biological information storage unit.

Thus, a data processing apparatus which a plurality of operators can use for a workflow can be realized.

The data processing apparatus can also further comprise a biological information storage unit for storing the biological information of a plurality of operators beforehand. In this case, when receiving the authenticate request, the data processing unit can collate biological information obtained by the biological information input unit when the prescribed data is inputted, with each piece of biological information of a plurality of operators stored in the biological information storage unit, and can authenticate it, based on the result of the collation.' Then, when receiving the authenticate request again, the data processing unit can also collate biological information obtained by the biological information input unit when the prescribed data is inputted again, with the biological information corresponding to the authentication result, and can also authenticate it, based on the result of the collation.

Thus, since the second and later authentication can be performed based on the first authentication result, time necessary for data processing can be reduced.

The data processing apparatus can also further comprise a data storage unit for storing the data, a display unit for displaying the data and a display control unit for displaying the data on the display unit when receiving the display request of the data from the data processing unit. In this case, when the authentication succeeds, the data processing unit can transmit the display request and the data stored in the data storage unit to the display control unit.

Thus, when an operator accesses data, there is no need to identify an operator by inputting his/her password/ID or the like.

The data processing unit of the data processing apparatus can also keep displaying the data on the display unit while an operator is inputting data.

Thus, an operator other than the identified relevant operator can be prevented from accessing data.

The display control unit of the data processing unit can also display the data on the display unit, according to qualification information indicating the operator qualification capable of accessing the data shown in the authentication result.

Thus, data can be accessed depending on an operator.

The data processing apparatus can also further comprise a signature unit for executing a public key infrastructure (PKI) signature, based on the authentication result when receiving a PKI authentication request, and transmitting an approval result indicating the result of the PKI signature to the data processing unit. In this case, the data processing unit can transmit the PKI signature request to the signature unit, based on prescribed data transmitted from the input unit, and also can store the approval result in the data storage unit after attaching it to the data when receiving the approval result from the signature unit.

Thus, the reliability of data to be processed can be improved as to an operator that is not registered on the data processing apparatus.

The IC card of the present invention is connected to a data processing apparatus comprising a data input unit for inputting data according to the operation of an operator, a biological information input unit for inputting the biological information of an operator and a data processing unit for issuing an authenticate request, responding to the authenticate request and authenticating it by collating biological information obtained by the biological information input unit with biological information registered beforehand in accordance with the operator, when receiving prescribed data from the data input unit, and performing a process after determining that the information from the data input unit is valid if it is determined that the result of the authentication is correct. The IC card comprises a biological information storage unit for transmitting/receiving data to/from the data processing apparatus and registering biological information for an authentication process and a biological authentication unit for authenticating biological information. The term "IC card" is used merely as shorthand for any form of portable storage device.

The program of the present invention issues an authenticate request, responds to the authenticate request and authenticates it by collating biological information obtained by the biological information input unit with biological information registered beforehand in accordance with the operator, when receiving prescribed data from the data input unit, and enables a computer to perform a process after determining that the information from the data input unit is valid if it is determined that the result of the authentication is correct.

The data processing method of the present invention issues an authenticate request, responds to the authenticate request and authenticates it by collating biological information obtained by the biological information input unit with biological information registered beforehand in accordance with the operator, when receiving prescribed data from the data input unit, and performs a process after determining that the information from the data input unit is valid if it is determined that the result of the authentication is correct.

Reference will now be made, by way of example, to the accompanying drawings in which:
Fig. 1 shows the configuration of the data processing apparatus in one preferred embodiment of the present invention.
Fig. 2A shows one example of a biological sensor with an input device.
Fig. 2B shows another example of a biological sensor with an input device.
Fig. 3 shows one example of a biological authentication DB.
Fig. 4 shows one example of an entry DB.
Fig. 5 shows the configuration of the data processing apparatus in another preferred embodiment of the present invention.
Fig. 6 explains the display operation of the data processing apparatus.
Fig. 7 shows the configuration of the data processing apparatus in another preferred embodiment of the present invention.
Fig. 8 shows one example of a format.
Fig. 9 is a flowchart showing the operation of a data entry device.
Fig. 10 is a flowchart showing the operation of a biological authentication device (No. 1).
Fig. 11 is a flowchart showing the operation of a biological authentication device (No. 2).
Fig. 12 is a flowchart showing the operation of a display control device.
Fig. 13 is a flowchart showing the operation of a PKI signature device.
Fig. 14 shows a series of flow in the case where entry data is registered.
Fig. 15 shows a series of flow in the case where entry data is accessed.

The preferred embodiments of the present invention are described below with reference to the drawings.

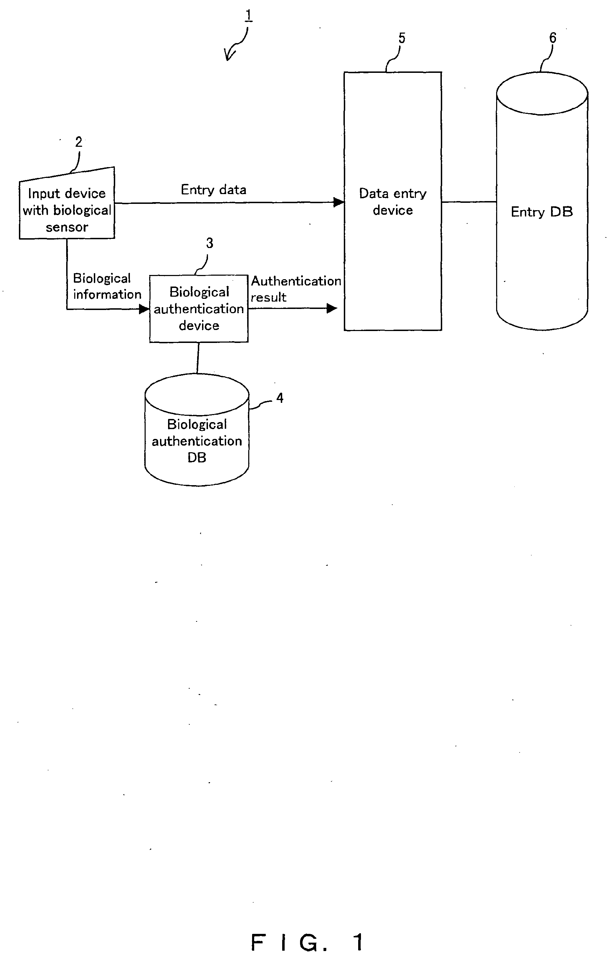

Fig. 1 shows the configuration of the data processing apparatus in one preferred embodiment of the present invention.

As shown in Fig. 1, a data processing apparatus 1 comprises an input device with a biological sensor (hereinafter called simply an "input device") 2, a biological authentication device 3, a biological authentication database (DB) 4, a data entry device 5 and an entry DB 6. Each of the biological authentication device 3 and data entry device 5 can also be configured by software or hardware. The biological authentication device 3 and biological authentication DB 4 can also be configured by the central processing unit (CPU) of an IC card and memory, respectively.

The input device 2 is provided with a function to input entry data to the data entry device 5 according to an operator' s operation and a function to obtain the biological information of the operator.

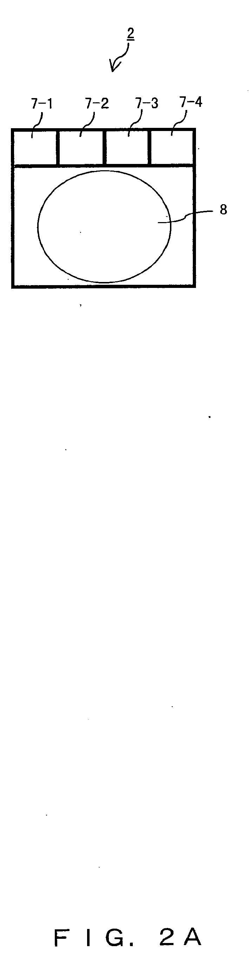

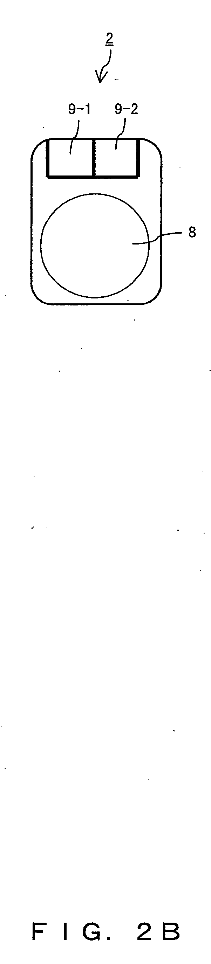

Fig. 2 shows one example of the input device 2. Figs. 2A and 2B show keyboard type and mouse type input devices 2, respectively.

The input device shown in Fig. 2A is a keyboard provided with input keys 7 (7-1~7-4). For the keyboard, a keyboard used as the input device of a personal computer or the like can be used. The input keys 7 can also be function keys provided for a keyboard.

As shown in Fig. 2A, a venous sensor 8 for detecting the hand palm vein of an operator is provided in the neighborhood of the input keys 7. In the input device 2 shown in Fig. 2A, the venous sensor 8 is provided in a position such that the hand palm of an operator and the venous sensor 8 may overlap each other when the operator pushes the input key 7.

The input device 2 shown in Fig. 2B is a mouse provided with input keys 9 (9-1~9-2). For the mouse, a mouse used as the input device of a personal computer or the like can be used. The input keys 9 can also be two buttons provided for a mouse.

As shown in Fig. 2B, a venous sensor 8 for detecting the hand palm vein of an operator is provided in the neighborhood of the input keys 9, as in the input device 2 shown in Fig. 2A. In the input device 2 shown in Fig. 2B, the venous sensor 8 is provided in a position such that the hand palm of an operator and the venous sensor 8 may overlap each other when the operator pushes the input key 9.

For example, when the input key 7-1 of the input device 2 shown in Fig. 2A is pushed, the venous sensor 8 detects the hand palm vein of the operator. In such a case, when the operator pushes the input key 7-1, the input device 2 transmits biological information based on the hand palm vein of the operator to the biological authentication device 3, and also transmits entry data indicating that the input key 7-1 is pushed to the data entry device 5.

Thus, by providing the input device 2 with the venous sensor 8 in a position such that the venous sensor 8 can obtain biological information when the input key 7 or 9 is pushed, the data processing apparatus 1 can obtain the biological information of an operator while the operator is operating the input key 7 or 9. Thus, the operability of an operator can be improved.

For the biological sensor provided for the input device 2, a variety of biological sensors, such as a fingerprint, an iris or the like, can be used besides the venous sensor 8.

Timing when the input device 2 obtains biological information is not limited. Biological information can be obtained at specific intervals. Alternatively, it can be obtained every time the input key 7 or 9 is pushed.

The input device 2 can also obtain biological information, based on timing given by another device, such as the data entry device 5 or the like.

For the input device 2, a variety of input devices, such as a scanner and the like can be used besides the keyboard and mouse.

When receiving an authenticate request from the data entry device 5, the biological authentication device 3 shown in Fig. 1 authenticates biological information transmitted from the input device 2 by collating it with the biological information of the operator, stored in the biological DB 4 beforehand, and transmits the result of the authentication to the data entry device 5.

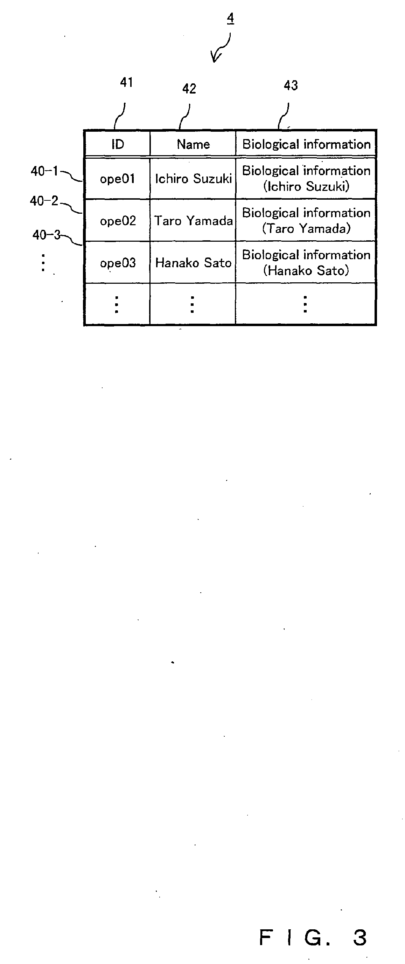

Fig. 3 shows one example of the biological authentication DB 4.

The biological authentication DB 4 shown in Fig. 3 is composed of a plurality of records 4 (40-1, 40-2, 40-3, ...) on which are recorded a plurality of pieces of biological information. Each record 40 comprises an ID area 41 for recording ID for identifying an operator, a name area 42 for recording the name of an operator and a biological information area 43 for recording the biological information of an operator.

In the example shown in Fig. 3, "ope01", "Ichiro Suzuki" and "biological information (of Ichiro Suzuki) " are recorded on the ID area 41, name area 42 and biological information area 43, respectively, of a record 40-1.

For example, when receiving an authenticate request from the data entry device 5, the biological authentication device 3 collates the biological information transmitted from the input device 2 with each piece of biological information stored in the biological authentication DB 4, extracts biological information whose collation ratio equals to or exceeds a predetermined value and returns information (an ID, a name, biological information, a collation ratio and the like) about an operator corresponding to the biological information to the data entry device 5 as the result of the authentication. If there is no biological information whose collation ratio equals to or exceeds the predetermined value in the biological authentication DB 4, the biological authentication device 3 returns an authentication result indicating the fact to the data entry device 5.

The data entry device 5 shown in Fig. 1 stores entry data transmitted from the input device 2, an authentication result transmitted from the biological authentication device 3, the operation history of the data processing apparatus 1 and the like. If the data processing apparatus 1 is used by a plurality of operators, the data entry device 5 stores all the operation histories of each operator in the entry DB 6.

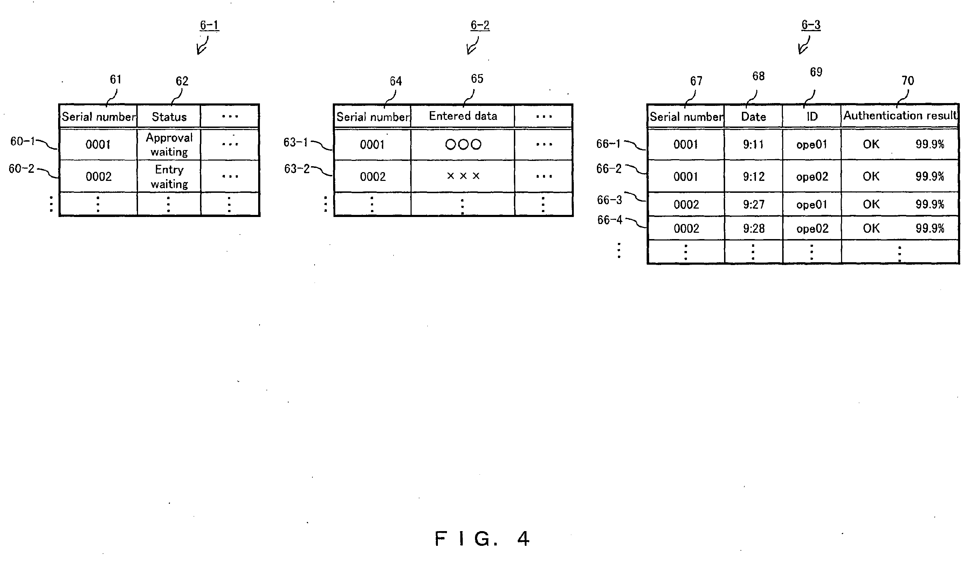

Fig. 4 shows one example of the entry DB 6.

The entry DB 6 shown in Fig. 4 comprises an entry management information DB 6-1, an entry data DB 6-2and an entry history information DB 6-3.

Firstly, the entry management information DB 6-1 is composed of a plurality of records 60 (60-1, 60-2, ...) for recording the current status of the data processing apparatus 1. Each record 60 comprises a serial number area 61 for recording a serial number allocated for each status type of the data processing apparatus 1 and a status area 62 for recording the current status of the data processing apparatus 1. In the example shown in Fig. 4, "0001" and "approval waiting" are recorded in the serial number area 61 and status area 62, respectively, of a record 60-1.

Then, the entry data DB 6-2 is composed of a plurality of records 63 (63-1, 63-2, ...) for recording entry data transmitted from the input device 2. Each record 63 comprises a serial number area 64 and an entry data area 65 for recording entry data. In the example shown in Fig. 4, "0001" and "OOO" are recorded on the serial number area 64 and entry data area 65, respectively, of a record 63-1.

Then, the entry history information DB 6-3 is composed of a plurality of records 66 (66-1, 66-2, 66-3, 66-4, ...) for recording an authentication result transmitted from the biological authentication device 3. Each record 66 comprises a serial number area 67, a date area 68 for recording the authentication dates of biological information, an ID area 69 for recording the ID of an operator and an authentication result area 70 for recording authentication results. In the example shown in Fig. 4, "0001", "9: 11", "ope01" and "OK 99.9%" are recorded on the serial number area 67, date area 68, ID area 69 and authentication result area 70, respectively, of a record 66-1.

For example, it is assumed that an operator (Ichiro Suzuki) pushes the input key 7-1 shown in Fig. 2A.

In this case, firstly, the input device 2 transmits entry data indicating the input key 7-1 is pushed to the data entry device 5, and also transmits biological information indicating the hand palm vein on an operator to the biological authentication device 3.

When receiving an authenticate request from the data entry device 5, the biological authentication device 3 collates the biological information transmitted from the input device 2 with each piece of biological information of the biological authentication DB 4 shown in Fig. 3 and calculates each collation ratio. Then, the biological authentication device 3 transmits an authentication result corresponding "biological information (of Ichiro Suzuki)" whose collation ratio is 99.9% or more to the data entry device 5.

When receiving an authentication result "OK 99. 9%", the data entry device 5 determines that the entry data indicating that the input key 7-1 is pushed is inputted by the operator (Ichiro Suzuki) and proceeds to the next operation.

As described above, since in the data processing apparatus 1, the input process of prescribed entry data (such as entry data indicating that an input key 7-1 is pushed) is synchronous with the authentication process of an operator, it can be assured that the prescribed entry data is inputted by the relevant operator, without a special operation for the authentication process.

Since the data processing apparatus 1 authenticates biological information using biological information in the case where prescribed entry data is inputted, the data entry device 5 cannot process data by the operation of an operator other than the identified relevant operator, and also there is no need to identify an operator by inputting his/her password/ID. Thus, since there is no need for the security education of operators, the reliability of data to be processed and the workability can be prevented from degrading.

Next, the data processing apparatus in another preferred embodiment is described.

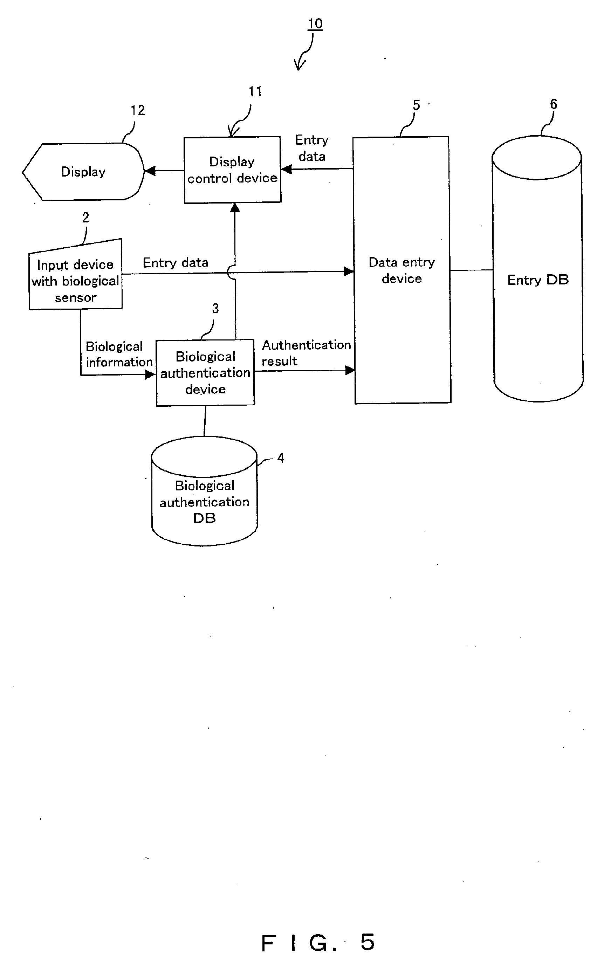

Fig. 5 shows the configuration of the data processing apparatus of another preferred embodiment of the present invention. The same reference numerals as in Fig. 1 are attached to the same components as in Fig. 1.

The data processing apparatus 10 shown in Fig. 5 comprises the input device 2, the biological authentication device 3, the biological authentication DB 4, the data entry device 5, the entry DB 6, a display control device 11 and a display 12.

When receiving an authenticate request from the data entry device 5, the biological authentication device 3 authenticates the biological information transmitted from the input device 2 by collating it with each piece of biological information stored in the biological authentication DB 4, and returns the result of the authentication to the data entry device 5. Simultaneously, the biological authentication device 3 transmits the authentication result to the display control device 11.

When receiving entry data indicating an reference to entry data stored in the entry DB 6 from the input device 2, the data entry device 5 issues an authenticate request to the biological authentication device 3. Simultaneously, when receiving an authentication result from the biological authentication device 3, the data entry device 5 extracts entry data corresponding to the entry data from the entry DB 6, based on the authentication result, and transmits it to the display control device 11.

When receiving the authentication result from the biological authentication device 3, the display control device 11 determines whether to display the entry data transmitted from the data entry device 5 on the display 12, based on the authentication result.

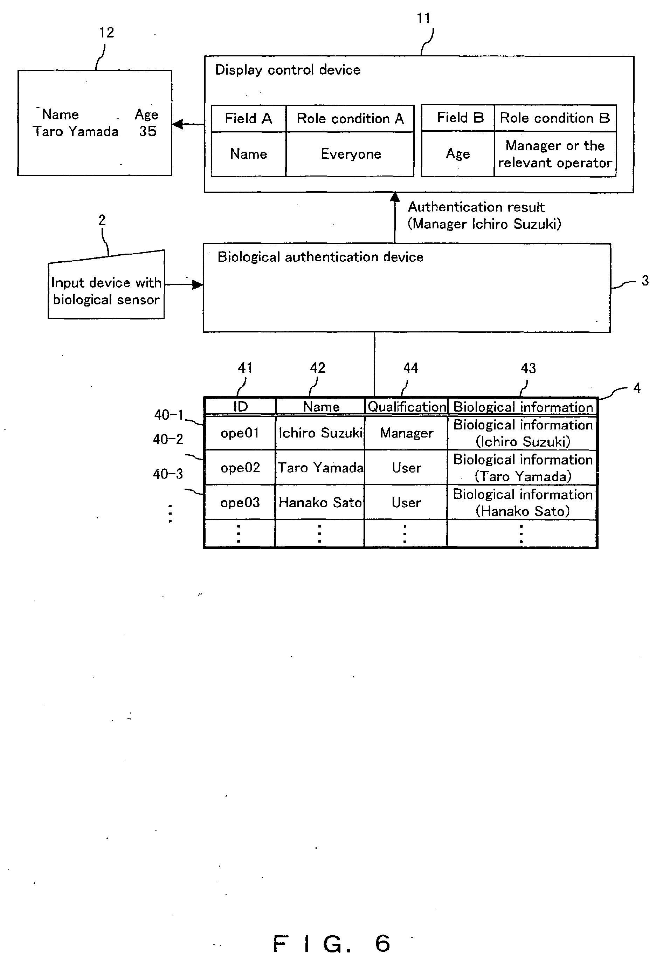

Fig. 6 explains the display operation of the data processing apparatus 10. The same reference numerals as in Figs. 5 or 3 are attached to the same components as in Figs. 5 or 3.

As shown in Fig. 6, each record 40 of the biological authentication DB 4 of the data processing apparatus 10 comprises a qualification area 44 for recording the qualification of operators capable of accessing entry data in addition to the ID area 41, name area 42 and biological information area 43.

If an authentication result (such as a name, qualification and the like) transmitted from the biological authentication device 3 meets a role condition (information indicating the qualification of an operator capable of displaying entry data), the display control device 11 displays the entry data transmitted from the data entry device 5 on the display 12. In this case, it is assumed that the entry data transmitted from the data entry device 5 to the display control device 11 in Fig. 6 is entry data indicating the personal information of an operator of a plurality of operators recorded in the biological authentication DB 4. The entry data is composed of a field A "name" and a field B "age". It is also assumed that a role condition A corresponding to the field A and a role condition B corresponding to the field B are "every one" and "relevant operator or manager", respectively. Thus, although everyone can access the field A "name" of entry data, only the relevant operator and the manager can access the field B "age" of entry data. In other words, the data that can be accessed depends on the operator.

It is assumed that an operator (Ichiro Suzuki) inputs entry data requiring the display 12 of the personal information of an operator (Taro Yamada) by operating the input device 2.

In this case, firstly, the input device 2 transmits the biological information of an operator (Ichiro Suzuki) to the biological authentication device 3.

Then, the biological authentication device 3 authenticates the biological information of the operator (Ichiro Suzuki), extracts "Ichiro Suzuki" and "manager" from the biological authentication DB 4, according to the authenticated biological information and transmits an authentication result indicating them to the display control device 11.

Then, the display control device 11 determines whether the authentication result transmitted from the biological authentication device 3 meets role conditions A and B, and displays the entry data of a met field on the display 12. In the example shown in Fig. 6, an authentication result indicating "manager" is transmitted from the biological authentication device 3 to display control device 11, and "name: Taro Yamada, age: 35" is displayed on the display 12 since the fields A and B both meet their role conditions.

The display control device 11 can also keep displaying entry data on the display 12 while an operator is operating the input device 2. Specifically, "name: Taro Yamada, age: 35" displayed on the display 12 shown in Fig. 6 can also continue to be displayed while the relevant operator (Taro Yamada) or the operator (Ichiro Suzuki), being the manager is operating the input device 2, and cannot also be displayed when the operator (Taro Yamada) or operator (Ichiro Suzuki) suspends the operation. Thus, the data reference of an operator other than the identified relevant operator can be prevented.

As described above, since biological information is authenticated in synchronization with the input of prescribed entry data by the operator's operation of the input device 2, there is no need to identify an operator by inputting his/her password/ID when the operator accesses entry data. Accordingly, the operation of the entire data processing apparatus 10 can be simplified.

Accessible entry data can also be limited depending on an operator.

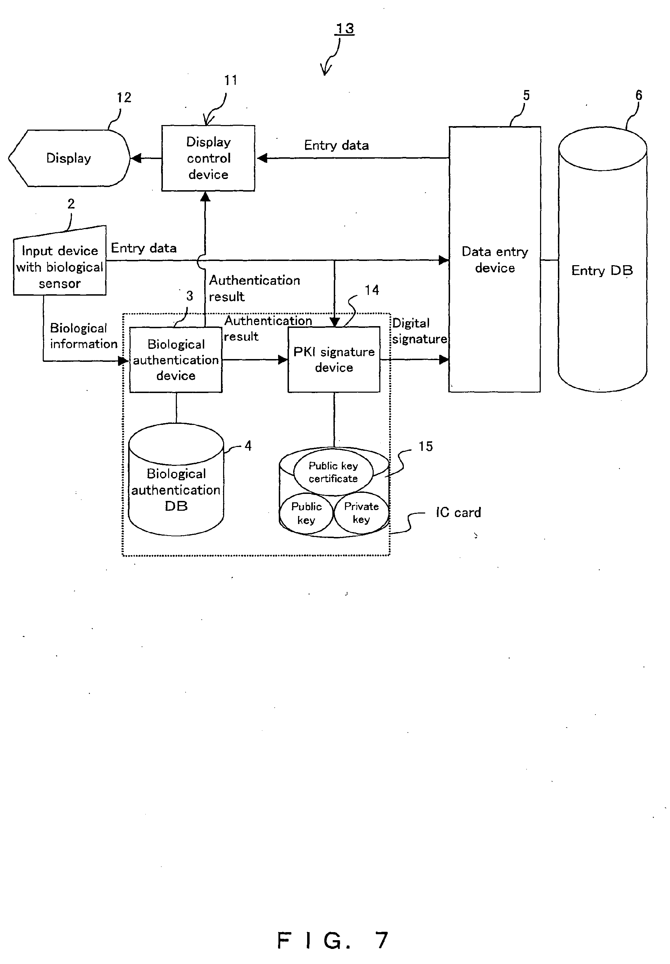

Fig. 7 shows the configuration of the data processing apparatus in another preferred embodiment of the present invention. The same reference numerals as in Fig. 5 are attached to the same components as in Fig. 5.

The data processing apparatus 13 shown in Fig. 7 comprises the input device 2, the biological authentication device 3, the biological authentication DB 4, the data entry device 5, the entry DB 6, the display control device 11, the display 12, a PKI signature device 14 and a PKI signature DB 15.

When receiving an authenticate request from the data entry device 5, the biological authentication device 3 authenticates biological information transmitted from the input device 2 by collating it with each piece of biological information stored in the biological authentication DB 4, and transmits the result of the authentication to the display control device 11 and PKI signature device 14.

When receiving a request for PKI signature from the data entry device 5, the PKI signature device 14 extracts the PKI-specified key pair (a public key and a private key) of an operator and a public key certificate that are shown in an authentication result from the PKI signature DB 15 and creates a digital signature, based on the keypair/public key certificate, the authentication result transmitted from the biological authentication device 3 and the entry data to be signed. Then, the PKI signature device 14 transmits the digital signature to the data entry device 5. In this case, it is assumed that the entry data to be signed is entry data transmitted from the input device 2 or entry data stored in the entry DB 6 beforehand. If a digital signature is created based on the authentication result of the biological information of an operator, the creation method of a digital signature is not limited.

For example, when receiving a request for PKI signature from the data entry device 5, the PKI signature device 14 calculates the hash of entry data to be signed, attaches an authentication result to the hash and calculates a signature value by encoding the hash with an authentication result using a private key. Then, the PKI signature device 14 transmits one set of the hash with an authentication result, signature value and public key certificate to the data entry device 5 as a digital signature.

When receiving the digital signature from the PKI signature device 14, the data entry device 5 attaches the digital signature to entry data to be signed and records it in the entry DB 6.

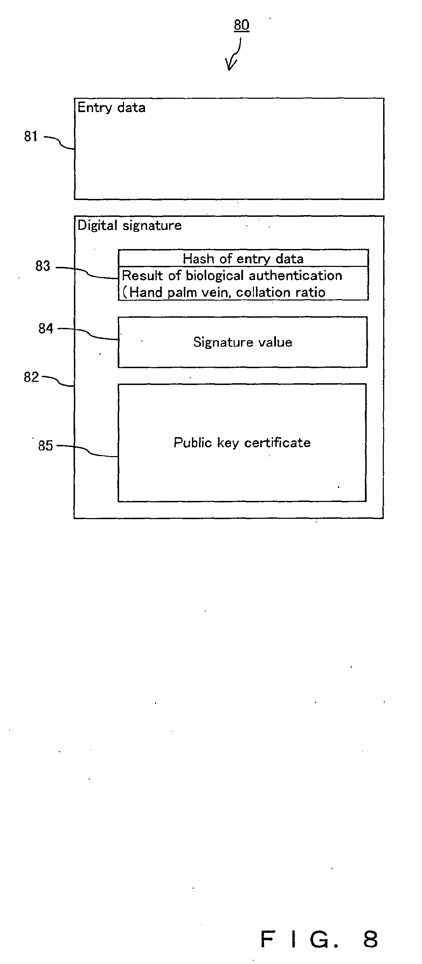

Fig. 8 shows one example of the format of entry data with a digital signature.

As shown in Fig. 8, a format 80 is, for example, a P7 type, and comprises an entry data area 81 for storing entry data and a digital signature area 82 for storing digital signatures.

The digital signature area 82 comprises a hash area 83 for storing the hash of entry data with an authentication result, a signature value area 84 storing signature values and a public key certificate area 85 for storing public key certificates.

As described above, since a digital signature is created based on the authentication result of the biological authentication device 3 and the digital signature is attached to entry data, the reliability of entry data to be signed can be improved by registering an operator in the data processing apparatus 13.

Alternatively, PKI signature by a plurality of operators can be applied to one piece of entry data.

Each of the biological authentication device 3 and PKI signature device 14 can also be configured in an IC card. Thus, since a digital signature cannot be created unless the biological information of an operator is not authenticated according to biological information transmitted to the IC card, the reliability of entry data to be signed can be further improved. Since there is no need to collectively manage the key pair and a public key certificate of each operator, the entire configuration of the data processing apparatus 13 can be proportionally simplified.

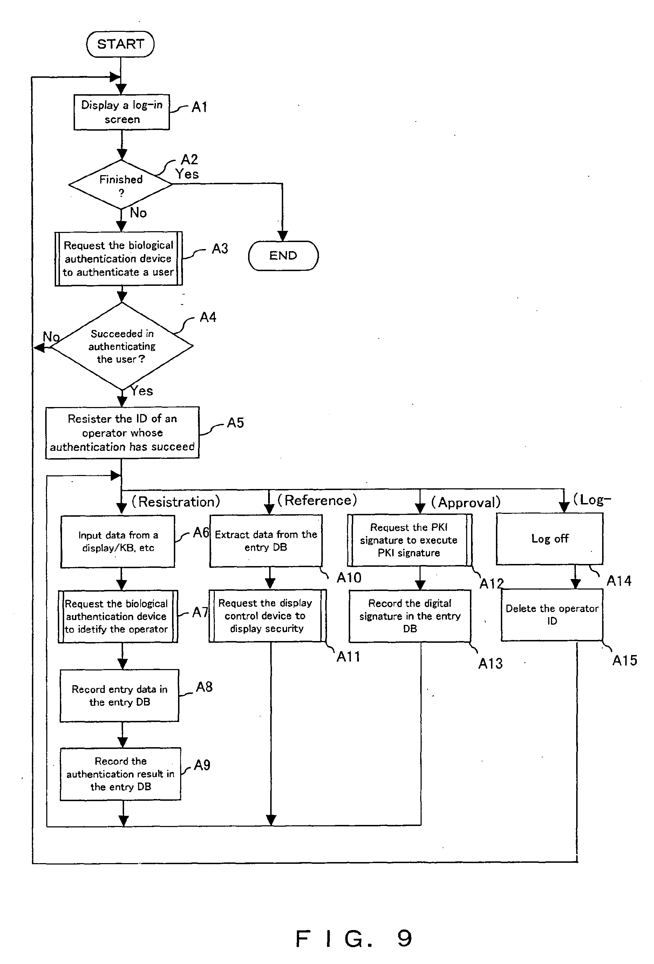

Fig. 9 is a flowchart showing the operation of the data entry device 5 in the data processing apparatus 13.

Firstly, in step A1, the data entry device 5 transmits entry data indicating a log-in screen to the display control device 11, and displays the log-in screen on the display 12.

Then, in step A2, the data entry device 5 determines whether the log-in screen should be closed and terminated by the operator's operation of the input device 2.

If it is determined that the screen should be terminated (yes in step A2), the operation of the data entry device 5 terminates.

If it is not determined that the screen should be terminated (no in step A2), in step A3, the data entry device 5 issues an authenticate request for the biological information of an operator to the biological authentication device 3 (user authentication).

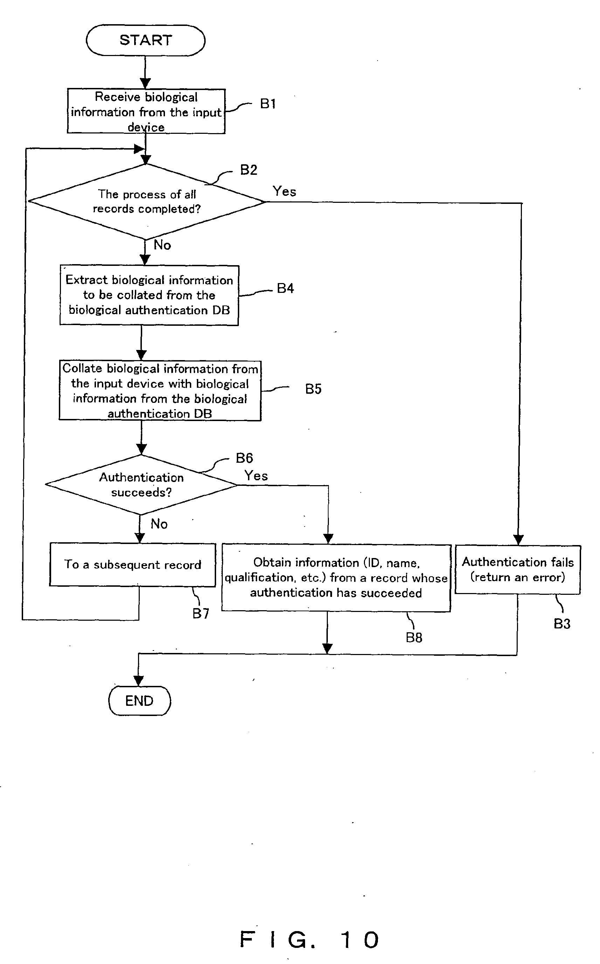

Fig. 10 is a flowchart showing the user authentication operation of the biological authentication device 3 in the data processing apparatus 13.

Firstly, in step B1, the biological authentication device 3 receives biological information from the input device 2.

Then, in step B2, the biological authentication device 3 determines whether the collation of biological information is applied to all the records of the biological authentication DB 4.

If it is determined that the collation of biological information is applied to all the records of the biological authentication DB 4 (yes in step B2), in step B3, the biological authentication device 3 determines that the authentication of the biological information has failed, and returns an error indicating that the authentication of the biological information has failed to the data entry device 5.

If it is not determined that the collation of biological information is applied to all the records of the biological authentication DB 4 (no in step B2), in step B4, the biological authentication device 3 selects some record from the plurality of records of the biological authentication DB 4, and extracts biological information from the selected record. For the record selection method, for example, there is a method for sequentially selecting it from the leading record. However the record selection method is not limited to it.

Then, in step B5, the biological authentication device 3 collates biological information transmitted from the input device 2 with biological information extracted from the biological authentication DB 4 and calculates a collation ratio.

Then, in step B6, the biological authentication device 3 determines whether the authentication of an operator has succeeded or failed, based on the calculated collation ratio. For example, if the calculated collation ratio equals to or exceeds a predetermined value, it is determined that the authentication of an operator has succeeded.

If it is not determined that the authentication of an operator has succeeded (no in step B6), in step B7, the biological authentication device 3 selects a subsequent record, and the process returns to step B2.

If it is determined that the authentication of an operator has succeeded (yes in step B6), in step S8, the biological authentication device 3 extracts information (such as an ID, a name, qualification, etc.) about an operator, stored in a record whose authentication has succeeded from the biological authentication DB 4 and terminates its operation.

In step A4 shown in Fig. 9, the data entry device 5 determines whether the authentication of biological information has succeeded in the biological authentication device 3.

If it is not determined that the authentication of biological information has succeeded (no in step A4), the process returns to step A1.

If it is determined that the authentication of biological information has succeeded (yes in step A4), in step A5, the data entry device 5 registers an ID shown in the authentication result transmitted from the biological authentication device 3 as data to be transmitted to the biological authentication device 3 when transmitting an authenticate request to the biological authentication device 3 next time. Thus, the second and later biological information can be authenticated based on the authentication result of the first biological information. Therefore, time needed for data processing can be shortened.

Then, the data entry device 5 determines which to do, to register entry data (such as image data read by a scanner provided for the input device 2) transmitted from the input device 2 in the entry DB 6, to display entry data (such as, image data,' etc., hereinafter called "registration data") registered in the entry DB6 on the display 12 to show it to the operator, or to attach a digital signature to the data registered in the entry DB 6 or to log off.

If registering the entry data transmitted from the input device 2 in the entry DB 6 (registration), in step A6, the data entry device 5 receives entry data indicating the intention to register entry data from the input device 2, such as a touch-panel type display or a keyboard (KB) or the like.

Then, in step A7, the data entry device 5 issues an authenticate request to the biological authentication device 3 (identification). Specifically, when detecting that the input of all pieces of information on the screen is completed, or that an execution button provided on the screen /the Enter key of a keyboard is pushed or the shift of the screen (next page, scroll or jump to a link) is instructed, that is, detecting the shift condition for a subsequent screen, the data entry device 5 issues an authenticate request.

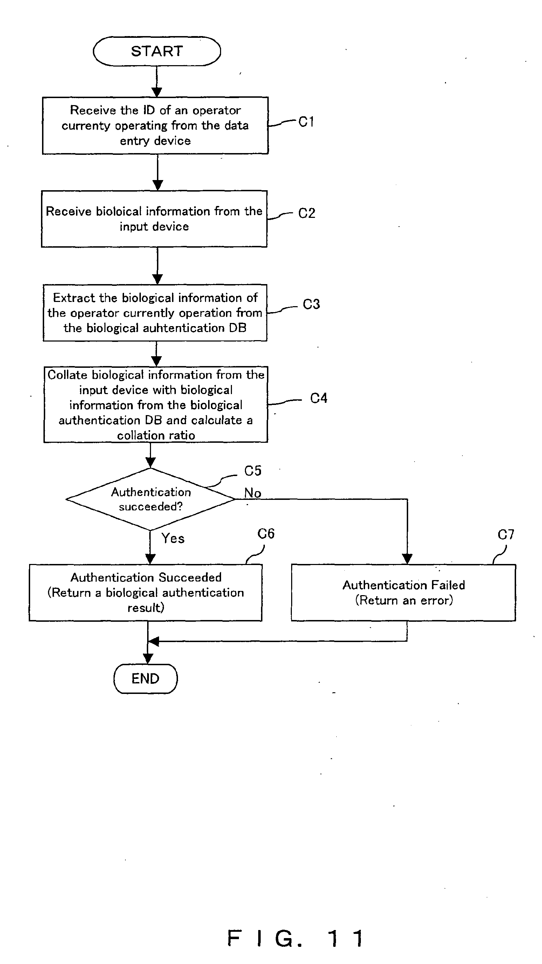

Fig. 11 is a flowchart showing the identification operation of the biological authentication device 3 in the data processing apparatus 13.

Firstly, in step C1, the biological authentication device 3 receives a registered ID from the data entry device 5.

Then, in step C2, the biological authentication device 3 receives biological information from the input device 2.

Then, in step C3, the biological authentication device 3 extracts biological information corresponding to the ID transmitted from the data entry device 5 from the biological authentication DB 4.

Then, in step C4, the biological authentication device 3 collates the biological information transmitted from the input device 2 with the biological information extracted from the biological authentication DB 4 and calculates a collation ratio.

Then, in step C5, the biological authentication device 3 determines whether the authentication of the biological information has succeeded, based on the calculated collation ratio.

If it is determined that the authentication of the biological information has succeeded (yes in step C5), in step C6, the biological authentication device 3 returns an authentication result indicating that the authentication of the biological information has succeeded to the data entry device 5.

If it is not determined that the authentication of the biological information has succeeded (no in step C5), in step C7, the biological authentication device 3 returns an authentication result indicating that the authentication of the biological information has failed to the data entry device 5.

Then, in step A8 shown in Fig. 9, the data entry device 5 registers the entry data transmitted from the input device 2 in the entry DB 6, based on the authentication result transmitted from the biological authentication device 3. For example, when receiving an authentication result indicating that the authentication of the biological information has succeeded, the data entry device 5 registers the entry data transmitted from the input device 2 in the entry DB 6.

Then, in step A9, the data entry device 5 registers the operation history of the data processing apparatus 13 in the entry DB 6.

Then, when having determined to display registration data stored in the entry DB 6 on display 12 and show it to the operator (reference), in step A10, the data entry device 5 extracts the registration data from the entry DB 6, According to entry data indicating an intention to access registration data, transmitted from the input device 2.

Then, in step A11, the data entry device 5 transmits the registration data extracted from the entry DB 6 and a display request to the display control device 11.

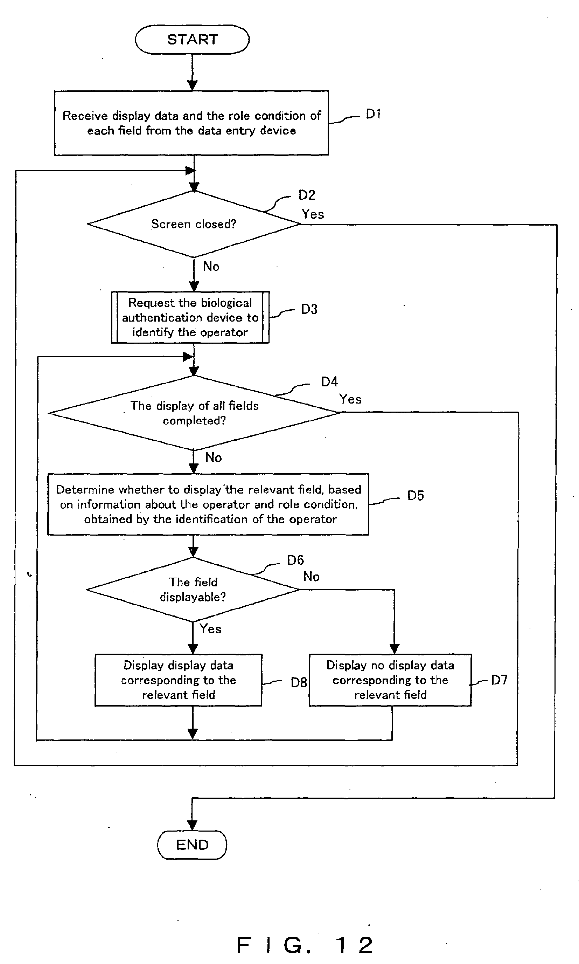

Fig. 12 is a flowchart showing the secure display operation of the display control device 11 in the data processing apparatus 13.

Firstly, in step D1, the display control device 11 receives registration data and a role condition from the data entry device 5. The role condition can also be received from the data entry device 5. Alternatively, the role condition can be registered in the display control device 11 beforehand.

Then, in step D2, the display control device 11 determines whether the screen displayed on the display 12 is closed.

If it is determined that the screen displayed on the display 12 is closed (yes in step D2), the operation of the display control device 11 terminates.

If it is not determined that the screen displayed on the display 12 is closed (no in step D2), in step D3, the display control device 11 issues an authenticate request to the biological authentication device 3. Since the authentication of biological information performed in the biological authentication device 3 in this case is the same as in the above-mentioned identification, its description is omitted here.

Then, in step D4, the display control device 11 determines whether information about the operator transmitted from the biological authentication device 3 has been compared with the role condition as to all displayed fields.

If it is determined that information about the operator has been compared with the role condition as to all display fields (yes instep D4), the process returns to step D2.

If it is not determined that information about the operator has been compared with the role condition as to all displayed fields (no instep D4), in step D5, the display control device 11 selects a display field that is not compared yet, compares it and determines whether to display the selected display field, based on the result of the comparison between the information about the operator and the role condition.

Then, in step D6, the display control device 11 determines whether the selected display field can be displayed.

When having determined that the selected display field cannot be displayed (no in step D6), in step D7, the display control device 11 does not display the selected display field on the display 12, and the process returns to step D4.

When having determined that the selected display field can be displayed (yes in step D6), in step D8, the display control device 11 displays the selected display field on the display 12, and the process returns to step D4.

In the example shown in Fig. 12, when a display field is selected, it is checked whether the comparison is applied to all the display fields, and if there is a display field to which the comparison is not applied, such a display field is displayed. However, the display method of registration data is not limited to it, and there is no need to always display each display field by an event-driven method or the like.

When having determined to attach a digital signature to the registration data in Fig. 9 (approval), in step A12, the data entry device 5 requests the PKI signature device 14 to execute PKI signature.

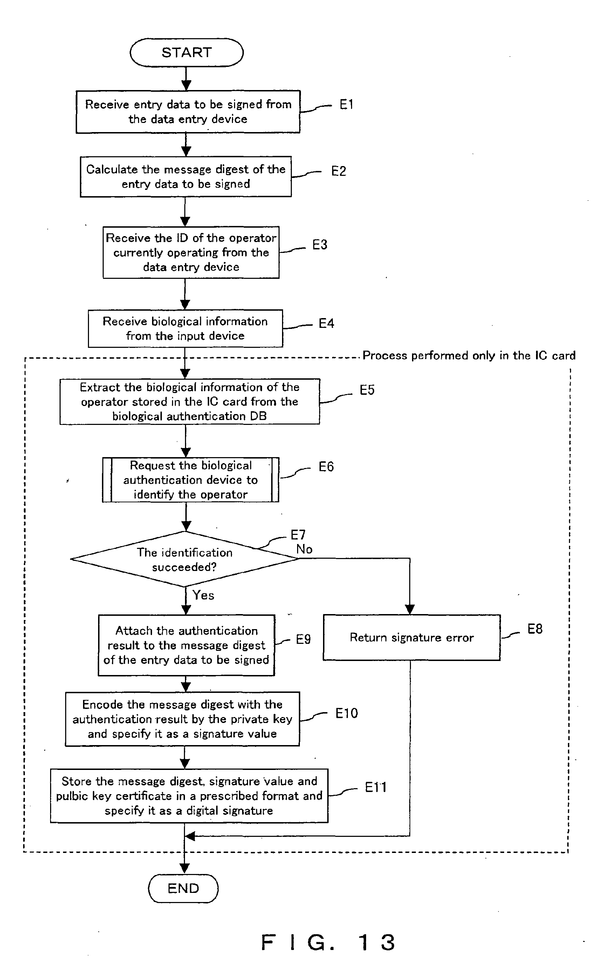

Fig. 13 is a flowchart showing the operation of the PKI signature device 14 in the data processing apparatus 13. The flowchart shown in Fig. 13 shows the operation of the PKI signature device 14 in the case where the biological authentication device 3 and PKI signature device 14 are both configured in an IC card.

Firstly, in step E1, the PKI signature device 14 receives registration data to be signed from the data entry device 5.

Then, in step E2, the PKI signature device 14 calculates the message digest (hash) of the registration data to be signed.

Then, in step E3, the PKI signature device 14 receives the ID of the operator from the data entry device 5.

Then, in step E4, the PKI signature device 14 receives biological information from the biological authentication device 3.

Then, in step E5, the PKI signature device 14 extracts the biological information of the relevant operator stored in the IC card from the biological authentication DB 4.

Then, in step E6, the PKI signature device 14 issues an authenticate request to the biological authentication device 3. Since this authentication of the biological information in the biological authentication device 3 is also the same as in the identification, its description is omitted here.

Then, in step E7, the PKI signature device 14 determines whether the authentication of the biological information has succeeded.

When having determined that the authentication of the biological information has not succeeded (no in step E7), in step E8, the PKI signature device 14 returns a signature error indicating that the digital signature has failed to the data entry device 5.

When having determined that the authentication of the biological information has succeeded (yes in step E7), in step E9, the PKI signature device 14 attaches the authentication result to the calculated message digest.

Then, in step E10, the PKI signature device 14 encodes the message digest with the authentication result by the private key recorded in the PKI signature DB 15, and specifies the encoded result as a signature value. In this case, it is assumed that the private key. of an operator possessing an IC card, the public key and the public key certificate are all recorded in the PKI signature DB 15 configured in the IC card.

Then, in step E11, the PKI signature device 14 specifies one set of the message digest with the authentication result, the signature value and the public key certificate recorded in the PKI signature DB 15 as a digital signature.

In step A13 shown in Fig. 9, when receiving the digital signature from the PKI signature device 14, the data entry device 5 attaches the digital signature to the registration data to be signed and records it in the entry DB 6.

After registration, reference or signature is completed in Fig. 9, the data entry device 5 determines which to execute, registration, reference, signature or log-off.

When having determined to log off (log-off), in step A14, the data entry device 5 logs off.

Then, in step A15, the data entry device 5 deletes the ID registered as data to be transmitted to the biological authentication device 3, and the process returns to step A1.

Next, one example of a series of operations ranging from log-in to the registration of entry data in the data processing apparatus 13 is described.

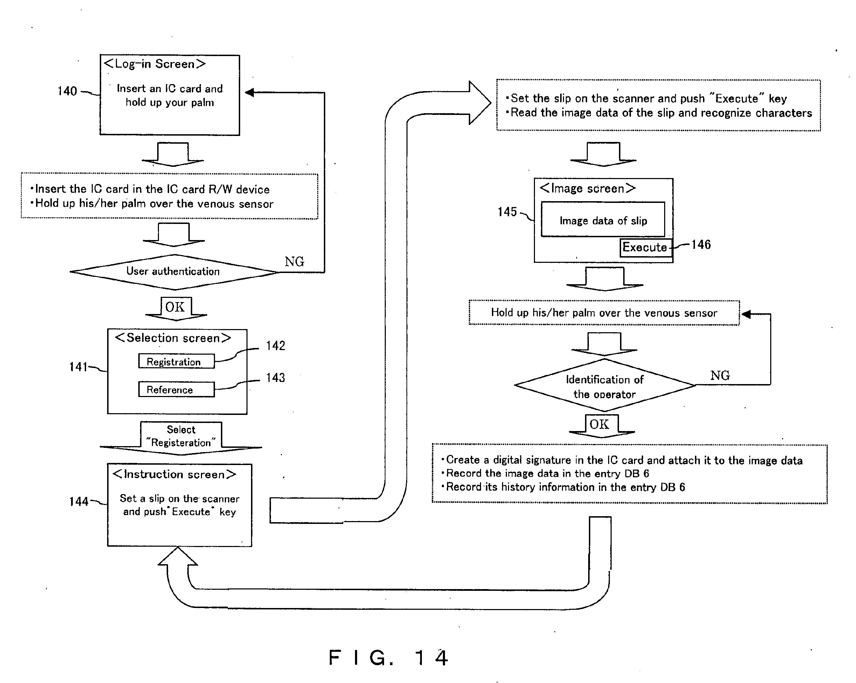

Fig. 14 shows a series of flows ranging from log-in to the registration of entry data in the data processing apparatus 13.

Firstly, an operator inserts an IC card into an IC card R/W (read/write) unit provided for the input device 2 and holds up his/her hand palm over a venous sensor. In this case, for example, the log-in screen 140 shown in Fig. 14 is displayed on the display 12.

Then, the biological authentication device 3 authenticates biological information, according to biological information transmitted from the input device 2 (user authentication).

If the authentication has failed (NG in user authentication), the log-in screen 140 continues to be displayed on the display 12.

If the authentication has succeeded (OK in user authentication), a selection screen 141 is displayed on the display 12.

Then, the operator selects a registration button 142 displayed on the selection screen 141 using the input device 2.

Then, an instruction screen 144 showing a sentence "Set a slip on the scanner and push the "Execute" key" is displayed on display 12.

Then, the operator sets a slip on the scanner provided for the input device 2, and pushes the input key 7-1 of the input device 2 shown in Fig. 2A. Alternatively, after a slip is set on the scanner, the execution button displayed on the instruction screen 144 can be selected using the input device 2 shown in Fig. 2B.

Then, the data entry device 5 reads the image data of the slip and performs character recognition or the like.

Then, an image screen 145 showing the read image data is displayed on display 12.

Then, the operator confirms the image screen 145 is displayed on the display 12.

After having confirmed that the slip is correctly read, the operator selects an execution button 146 provided on this image screen 145. In this case, the hand palm of the operator is held up over the venous sensor. When receiving entry data indicating that the execution button 146 is selected, the data entry device 5 issues an authenticate request to the biological authentication device 3 (identification).

If the authentication of the biological information has failed (NG in identification), the image screen 145 continues to be displayed on the display 12.

If the authentication of the biological information has succeeded (OK in identification), a digital signature is created in the IC card and is attached to the image data. Then, the image data with the digital signature and its history information are recorded in the entry DB 6.

Then, the instruction screen 144 is displayed on the display 12 again, and the operator sets a subsequent slip on the scanner. In this case, alternatively, the selection screen 141 can be displayed on the display 12.

Next, a series of flows ranging from log-in to the reference of registration data in the data processing apparatus 13 is described.

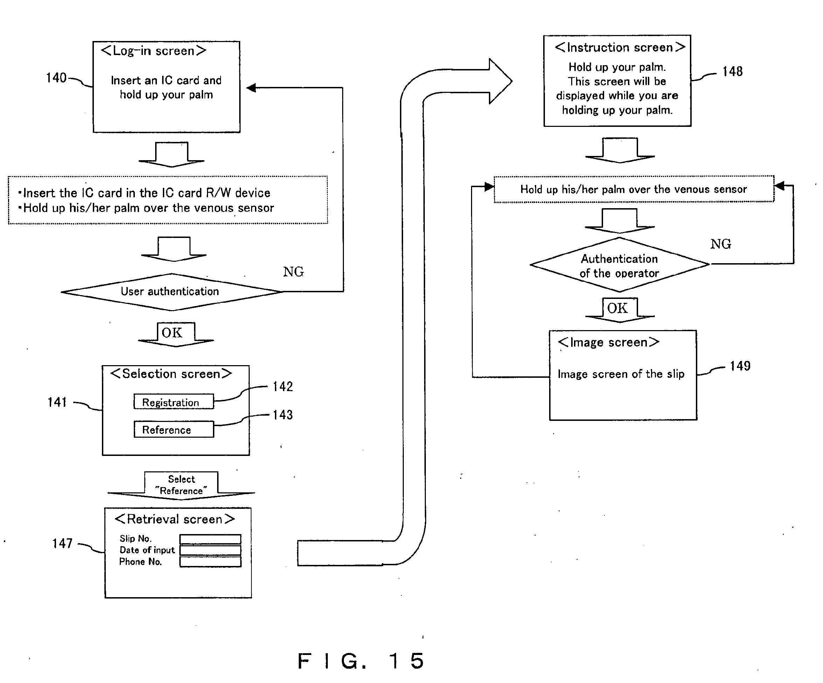

Fig. 15 shows a series of flows ranging from log-in to the reference of entry data in the data processing apparatus 13. The same reference numerals as shown in Fig. 14 are attached to the same components as shown in Fig. 14. A series of operations ranging from the display of the log-in screen 140 on the display 12 to the display of the selection screen 141 on the display 12 are the same as shown in Fig. 14, their descriptions are omitted here.

Firstly, an operator selects a reference button 143 displayed on the selection screen 141, using the input device 2.

Then, a retrieval screen 147 for searching for registration data to be referred is displayed on the display 12.

Then, the data entry device 5 searches for the registration data inputted on the retrieval screen 147, and displays an instruction screen 148 showing a sentence "Hold up your palm. This screen will be displayed while you are holding up your palm." on the display 12.

Then, the operator holds up his/her hand palm over the venous sensor.

Then, the data entry device 5 issues an authenticate request to the biological authentication device 3 (identification).

If the authentication of the biological information has failed (NG in identification), the instruction 148 continues to be displayed on the display 12.

If the authentication of the biological information has succeeded (OK in identification), an image screen 149 showing the image data of retrieved registration data is displayed on the display 12.

Generally, when configuring a data processing apparatus with high security, the number of authentication operations, such as the identification of an operator and the like, increases and the operability of the data processing apparatus degrades, which is a problem. In the data processing apparatus 1, 10 or 13 of the preferred embodiment, since biological information can be authenticated without an operator performing a special operation in order to authenticate it, even frequent authentication does not degrade its operability and security.

Each of the input device 2, biological authentication device 3, biological authentication DB 4, data entry device 5, entry DB 6, display control device 11, display 12, PKI signature device 14 and PKI signature DB 15 can also be configured in a stand-alone computer. Alternatively, they can be configured via a local area network (LAN) or the like.

The biological authentication device 3, data entry device 5, display control device 11 or PKI signature device 14 can also be realized by enabling an operation unit, such as a CPU or the like, to execute an application program recorded on a storage medium, such as random-access memory (RAM), read-only memory (ROM), etc.

The biological authentication DB 4, entry DG 6 or PKI signature DB 15 can also be realized by a storage medium, such as RAM, ROM, etc.

According to the present invention, since biological information is authenticated using its biological information in the case where prescribed data is inputted, data can be processed only by the relevant operator, and also there is no need to identify the operator by inputting his/her password/ID. Therefore, there is no need for the security education of operators. Accordingly, the reliability of data to be processed and operability of an operator can be prevented from degrading.

## Claims

1. A data processing apparatus (1), comprising:
a data input unit (2) for inputting data according to an operation of an operator;
a biological information input unit (2) for inputting biological information of an operator; and
a data processing unit (3,5) for issuing an authenticate request when receiving prescribed data from the data input unit (2), responding to the authenticate request, authenticating biological information obtained by the biological information input unit (2) by collating the information with biological information registered corresponding to an operator beforehand and processing information from the data input unit (2) determining the information to be valid when receiving an authentication result that the result is correct.

2. The data processing apparatus (1) according to claim 1, further comprising
a biological information storage unit (4) for storing a plurality of pieces of biological information of a plurality of operators beforehand,
wherein.
when receiving the authenticate request, said data processing unit (3) authenticates the biological information obtained by said biological information input unit (2) when the prescribed data is inputted by collating the information with each of the plurality of pieces of a plurality of operators stored in said biological information storage unit (4).

3. The data processing apparatus (1) according to claim 1, further comprising
a biological information storage unit (4) for storing a plurality of pieces of biological information of a plurality of operators beforehand,
wherein
when receiving the authenticate request, said data processing unit (3) authenticates the biological information obtained by said biological information input unit (2) when the prescribed data is inputted, by collating the information with each of the plurality of pieces of a plurality of operators stored in said biological information storage unit (4), and when receiving the authenticate request again, said data processing unit (3) authenticates the biological information obtained by said biological information input unit (2) when the prescribed data is inputted, according to the biological information corresponding to the authentication result.

4. The data processing apparatus (1) according to claim 1, further comprising:
a data storage unit (6) for storing the data:
a display unit (12) for displaying the data; and
a display control unit (11) for displaying the data on the display unit (12) when receiving a display request of the data from the data processing unit (5),
wherein
when the authentication has succeeded, said data processing unit (5) transmits the display request and the data stored in the data storage unit (6) to the data display control unit (11).

5. The data processing apparatus (1) according to claim 4, wherein
said data processing unit (5) continues to display the data on said display unit (12) while an operator is operating said input unit (2).

6. The data processing apparatus (1) according to claim 4, wherein
said display control unit (11) displays the data on said display unit (12), according to qualification information indicating the qualification of an operator capable of accessing the data shown by the authentication result.

7. The data processing apparatus (1) according to claim 4, further comprising
a signature unit (14) for executing public key infrastructure (PKI) signature, based on the authentication result when receiving a PKI signature request of the data and transmitting an approval result indicating execution of the PKI signature to said data processing unit (5),
wherein
said data processing unit (5) issues a PKI signature request to the signature unit (14), according to prescribed data transmitted from said data input unit (2), and also records the data in said data storage unit (6) after attaching the approval result to the data when receiving the approval result from the signature unit (14).

8. An IC card connected to a data processing apparatus (1) which comprises a data input unit (2) for inputting data according to an operation of an operator, a biological information input unit (2) for inputting biological information of an operator and a data processing unit (3,5) for issuing an authenticate request when receiving prescribed data from the data input unit (2), responding to the authenticate request, authenticating biological information obtained by the biological information input unit (2) by collating the information with biological information registered corresponding to an operator beforehand and processing information from the data input unit (2) determining the information to be valid when receiving an authentication result that the result is correct, for transmitting/receiving data to/from the data processing apparatus, comprising:
a biological information storage unit (4) for storing biological information for an authentication process; and
a biological authentication unit (3) for performing an authentication process of biological information.

9. A program for enabling a computer to execute a process, said process comprising:
when receiving prescribed data from a data input unit (2) provided for a device,
issuing an authenticate request when receiving prescribed data from the data input unit (2);
responding to the authenticate request;
authenticating biological information obtained by the biological information input unit (2) by collating the information with biological information registered corresponding to an operator beforehand; and
processing information from the data input unit (2) determining the information to be valid when receiving an authentication result that the result is correct.

10. A data processing method, comprising:
when receiving prescribed data from a data input unit (2) provided for a device,
issuing an authenticate request when receiving prescribed data from the data input unit (2);
responding to the authenticate request;
authenticating biological information obtained by the biological information input unit (2) by collating the information with biological information registered corresponding to an operator beforehand; and
processing information from the data input unit (2) determining the information to be valid when receiving an authentication result that the result is correct.
